Europäisches Patentamt

European Patent Office

Office européen des brevets

(11) Publication number: **0 492 785 A1**

# EUROPEAN PATENT APPLICATION

(21) Application number: 91310356.0

(22) Date of filing: 08.11.91

(51) Int. Cl.⁵: **B60J 1/00**

(30) Priority: **24.12.90 US 632909**

(43) Date of publication of application:
**01.07.92 Bulletin 92/27**

(84) Designated Contracting States:
**DE FR GB**

(71) Applicant: **FORD MOTOR COMPANY LIMITED**
**Eagle Way**
**Brentwood Essex CM13 3BW(GB)**
(84) **GB**

(71) Applicant: **FORD-WERKE**
**AKTIENGESELLSCHAFT**
**Werk Köln-Niehl Henry-Ford-Strasse**
**Postfach 60 40 02**
**W-5000 Köln 60(DE)**
(84) **DE**

(71) Applicant: **FORD FRANCE S. A.**

B.P. 307
F-92506 Rueil-Malmaison Cédex(FR)
(84) **FR**

(72) Inventor: **Best, Mark F.**
**9508 Birch**
**Taylor, Michigan 48180(US)**
Inventor: **Boulos, Edward N.**
**4395 Stonehenge Court**
**Troy, Michigan 48098(US)**
Inventor: **Mandernach, Michael C.**
**14579 Harrison Avenue**
**Allen Park, Michigan 48101(US)**
Inventor: **Spagnoli, Robert Alan**
**3541 Shenandoah Avenue**
**Port Huron, Michigan 48060(US)**

(74) Representative: **Messulam, Alec Moses et al**
**A. Messulam & Co. 24 Broadway**
**Leigh on Sea Essex SS9 1BN(GB)**

(54) A sheet non-planar window having an anti-reflective coating and method for making the window.

(57) The present invention relates to a non-planar window having an anti-reflective coating and a method for making this window. The window, more specifically incorporates two sheets (22,24) of glass which are separated by an air gap (34) and at least one of the surfaces of the non-planar window includes the anti-reflective coating (26,28,30,32). The method of making the non-planar window includes dipping at least one glass sheet in a bath comprising a sol-gel anti-reflective coating, curing the coating by heating, bending the planar glass sheets, cooling the glass sheets and then assembling the glass sheets at their peripheries so that an air gap is formed between the glass sheets.

FIG.2

The present invention relates to a non-planar window having an anti-reflective coating and a method for making this window. The window more specifically incorporates two sheets of glass which are separated by an air gap and at least one of the surfaces of the non-planar window includes the anti-reflective coating.

Automotive designers have been seeking to minimize exterior road noise by utilizing complex automotive glass components packaged in the latest aerodynamic parts. These parts are thinner and thus are reduced in weight from normal automotive glass parts. The use of the thinner glass, however, can create objectionable exterior noise especially for luxury vehicle owners. One possible solution is to use a window which incorporates two thin glass sheets separated by an air gap. The air gap helps reduce or eliminate the noise and allows the use of the thinner glass sheets, especially for the sidelites of a car.

It has been found, by the present inventors, that when the dual glass sheet part is bent into a non-planar window, a double image is created for someone who is inside the vehicle looking at an object outside the vehicle. The double image occurs because a reflected image is created when the image of the object bounces off the interior glass sheet and then reflects back into the vehicle by the exterior glass sheet.

We are aware of no teaching which solves the double image problem for a non-planar window made of two glass sheets having an air gap therebetween.

We are aware of the use of an anti-reflective coating utilized between two pieces of glass in conjunction with an electrically heated window as set forth in U.S. Patent No. 4,771,167. This patent, which has co-inventors in common with the instant application, discloses an electrically heated window having a sol-gel anti-reflective coating adjacent to an electrically conductive coating and a laminate interlayer all of which are disposed between two pieces of glass. This patent, however, does not disclose an air gap between the glass sheets nor does it disclose the problem or the solution of the double image which is created by the non-planar window.

U.S. Patent No. 3,978,273 discloses a heat reflecting planar window which may have two glass sheets separated by an air gap and coated on one of the glass sheets is a plurality of layers including a transparent support layer, an absorption layer, a silver reflecting layer and an anti-reflecting layer. This patent does not, however, disclose a non-planar window or any of the associated problems related to the formation of double images nor does it disclose a solution to this problem.

The present invention relates to a non-planar window, especially for automotive use, which comprises two glass sheets having glass surfaces arranged in a facing relationship and glass surfaces forming the outside and the inside surfaces of the window. The glass sheets are connected in such a fashion to form an air gap between them and at least one of the surfaces of one of the glass sheets includes an anti-reflective coating for reducing or eliminating the double image associated with the window having the complex geometry. It is contemplated by the present invention that the anti-reflective coating can also be applied to several surfaces of the glass sheets.

The anti-reflective coating can be either a sol-gel coating or can be provided by other methods such as chemical vapor deposition. The preferred sol-gel coating comprises a three layer coating with the first layer being formed of a mixture of $TiO_2$ and $SiO_2$, the second layer being made of $TiO_2$ and the third layer being made of $SiO_2$.

The three layer coatings are applied such that the thickness of each layer is as follows: a quarter (1/4) wavelength thickness for the first layer, a half (1/2) wavelength thickness for the second layer and a quarter (1/4) wavelength thickness for the third layer. This design gives the preferred anti-reflective properties.

The non-planar window may be coated on all four non-planar surfaces of the glass sheets and such an arrangement would provide the optimal performance in terms of reducing the double image that can arise. The best mechanical abrasion resistance would be with only the interior glass surfaces, those adjacent to the air gap, being coated. It is also possible to coat other surfaces, for example, the surfaces adjacent the air gap as well as the interior glass surface facing the vehicle. It is also contemplated that only one surface may be coated with the anti-reflective coating.

The method of making the non-planar window comprises dipping a glass sheet in baths containing the sol-gel solutions to deposit the anti-reflective coating. This is followed by curing the sol-gel anti-reflective coating by heating the glass sheet and then cooling the glass sheet to room temperature. Additional coatings may be provided by repeating the above steps and then finally curing the plurality of layers at an elevated temperature while bending the planar glass sheets into the complex non-planar shapes. The non-planar glass sheets are then assembled into a window by assembling them at their respective peripheries such that an air gap is formed between the glass sheets.

In another embodiment of the invention, the glass sheets may be coated with the anti-reflective coating by chemical vapor deposition. Following the deposition, the sheets can then be bent in a bending furnace and then cooled prior to assembly of the sheets at their peripheries to form an air gap therebetween.

The invention will now be described further, by way of example, with reference to the accompanying drawings, in which :

Figure 1 is a schematic view, in cross section, of a portion of a non-planar window illustrating the double image present in such a window without any anti-reflective coating on the surfaces of the glass sheets.

Figure 2 is a schematic view, in cross section, of a portion of a non-planar window incorporating anti-reflective coatings on all four surfaces of the two glass sheets according to a preferred embodiment of the present invention.

Figure 3 is a schematic view, in cross section, of a portion of a non-planar window incorporating anti-reflective coatings on the glass surfaces adjacent the air gap created between the glass sheets according to another embodiment of the present invention.

Figure 4 is a schematic view, in cross section, of a portion of a non-planar window incorporating anti-reflective coatings on both surfaces of the glass sheet adjacent to the vehicle interior and one coating on the exterior glass sheet's surface which is adjacent to the air gap according to another embodiment of the present invention.

Figure 5 is an enlarged schematic view, in cross section, of the anti-reflective coating showing the preferred three layer sol-gel anti-reflective coating according to the present invention.

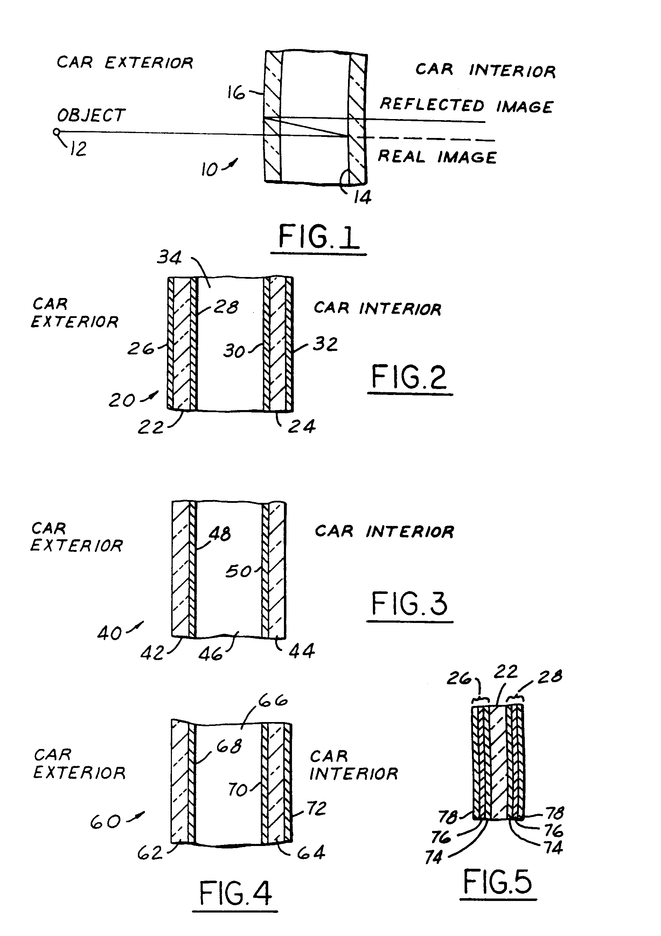

Figure 1 discloses the appearance of the real and reflected image that is apparent to a passenger riding inside a vehicle having a non-planar window 10 when viewing an object 12 exterior of the vehicle. This double image situation is created because some of the light of the real image is reflected off the interior glass sheet surface 14 and then reflects back off the surface 16 of the exterior glass sheet toward the vehicle interior.

The present invention allows the double image to be reduced or eliminated by providing at least one anti-reflective coating on one of the surfaces of the glass sheets forming the non-planar window.

Figure 2 discloses a non-planar window 20 made from two glass sheets 22 and 24 having anti-reflective coatings 26, 28, 30 and 32 on the outside surface, the surfaces which are arranged in facing relationship with one another and the inside surface, respectively. The coatings 28 and 30 on glass sheets 22 and 24 are separated by an air gap 34. This air gap 34 can be formed by any means well known in the art and one such method is by providing a mechanism for spacing the glass sheets at their respective peripheral edges. This arrangement provides the optimum performance in terms of reducing the double image created by the non-planar window.

Figure 3 discloses another embodiment of a non-planar window 40 formed of two glass sheets 42 and 44 which are separated by an air gap 46. The glass sheets 42 and 44 are provided with anti-reflective coatings 48 and 50 respectively, on the surfaces which are adjacent to the air gap 46. This arrangement of coatings in the non-planar window 40 provides the best mechanical abrasion resistance.

Figure 4 discloses another embodiment of a non-planar window 60 made of two glass sheets 62 and 64 which are separated by an air gap 66. The glass sheets 62 includes an anti-reflective coating 68 facing the air gap 66 and the glass sheet 64 includes an anti-reflective coating 70 adjacent the air gap 66 and an anti-reflective coating 72 facing the vehicle interior. This arrangement of coatings on non-planar window 60 provides good overall anti-reflective performance and good mechanical abrasion resistance.

Figure 5 illustrates that the anti-reflective coating such as that shown in Figure 2 for glass sheet 22 having coatings 26 and 28. These coatings are preferably made of three distinct layers. The first layer 74 shown on both sides of the surface of glass sheet 22 can be made from material selected from $TiO_2$-$SiO_2$, $Al_2O_3$, $Ta_2O_5$-$SiO_2$, and $ZrO_2$-$SiO_2$. The exact thickness is determined by refractive index of the material selected and can be found using the following formula:

$$\text{Thickness of the layer} = \frac{\text{the wavelength of light}}{4 \times (\text{refractive index})}$$

wherein the wavelength of light is selected to be 5500 Angstroms. Therefore, for a blend of $TiO_2$-$SiO_2$ having a refractive index between 1.60 and 1.70, the thickness of the first layer must be between 800-860 Angstroms.

The second layer 76 adjacent to the first layer 74 can be formed of materials selected from $TiO_2$, $SiO_2$-$TiO_2$, $Ta_2O_5$, and $SiO_2$-$Ta_2O_5$ and $ZrO_2$. The thickness of this layer is preferably of a half (1/2) wavelength design and therefore, depending on the refractive index of the material selected for the second layer, the proper thickness can be determined. For example, if the second layer is $TiO_2$ having a refractive index between 2.05 and 2.30, the thickness of the layer must be between 1190-1350 Angstroms.

The third layer 78 is formed on top of the second layer 76 and can be formed of materials selected from $SiO_2$, $MgF_2$, porous $Al_2O_3$, $Al_2O_3$-$SiO_2$, $TiO_2$-$SiO_2$, $Na_2O$-$MgO$-$Al_2O_3$-$SiO_2$, and fluorinated $MgO$-$SiO_2$. This third layer has a thickness preferably determined according to the quarter (1/4) wavelength design mentioned above. Therefore, if the third layer is $SiO_2$ having a refractive index between 1.38-1.48, the thickness of the third layer must be between 930-1000 Angstroms.

The method for making the non-planar window according to the present invention includes dipping the glass sheets in a bath or baths containing the sol-gel solutions to deposit the anti-reflective coating. This dipping occurs after the particular sol-gel coating has been selected and the thickness that is needed is calculated as described above. This thickness can be obtained by dipping the glass sheet into the bath and utilizing a particular withdrawal rate to obtain the desired thickness. The procedure for calculating the withdrawal rate to obtain your desired thickness through sol-gel coating is well known in the art from, for example, I. Strawbridge and P.F. James, "Thin Silica Films Prepared by Dip Coating," J. Non-Crystall. Solids, 82 366-372 (1986) or M. Gibson and J. Frejlich, "Dip-Coating Method for Fabricating Thin Photoresist Films," Thin Solid Films, 128 161-170 (1985). Following the dipping process, each layer is cured by heating the glass sheet to approximately 250ºC for 10 mins. and then cooling the glass sheet to room temperature. This procedure is repeated for each layer that is added to the previous layer coating. Once the final sol-gel layer is applied, the glass sheet is heated to approximately 500-620ºC for 10 mins. at which point the planar glass sheets can be bent to the proper shape and then cooled to room temperature. Following the cooling step, the glass sheets can be assembled at their respective peripheries so that an air gap is formed between the glass sheets. The window is now completely assembled and is ready for installation.

If only one glass sheet is to have an anti-reflective coating on either one surface or both, this sheet can be provided with the coatings and then during the final heating stage, the second non-coated glass sheet can be heated simultaneously therewith. This will allow the two glass sheets to be bent together.

If only one surface of a particular glass sheet is to have the anti-reflective coating thereon, it is possible to mask one side of the glass sheet for the dipping process. It is also possible to assemble two glass sheets together in such a fashion so that only the outer surfaces of the two sheets are coated when dipped. The preferred method for doing this procedure is to place a piece of glass with the desired coating side being face down on a flat table. Along at least three of the four edges, just inside the edge, a bead of a suitable thermoplastic, alcohol resistant, organic, glass sealant is placed. One such possible sealant is Morton International's Thiokol 850. It is applied as an approximately 3/32" bead to the first glass sheet. The second sheet is then placed on top of the first sheet with its desired coating side being face up. The glass sheets are pressed firmly together until a clearance of approximately 3/64" between the pieces of glass is reached. The assembly can then be raised vertically and dipped into a sol-gel solution. If only three edges of the assembly are sealed with sealant, it is important not to allow sol-gel to flow in the unsealed side. After each dip in the sol-gel bath, the sealant can remain in place through modest heating cycles and/or humidity treatments. Then before firing the two glass sheets are cut apart and the bulk of the sealant is scraped away. Optionally, it can all be left in place to be burned off in the lear. Any ash which results from this burn off can be washed off easily in ordinary glass washing equipment.

This method provides a durable anti-reflective coating on windshield. Also to avoid any questions about the adhesion of glass to a polyvinyl butyryl (PVB) interlayer, it is useful to have the ability to coat only one side of the glass with sol-gel, leaving the other side for bonding as before to the plastic PVB.

It is also contemplated that a single glass sheet can have one surface treated with a non-wetting film which burns off cleanly between 500-620ºC, leaving a single side anti-reflective coating after dipping in the sol-gel solution baths.

Some of the specific sol-gel solutions for forming the anti-reflective coating are set forth in U.S. Patent No. 4,771,167 and this disclosure is incorporated herein by reference.

It is understood in the art that air gaps intended for noise abatement are often filled with gasses other than air and then sealed. One example of this type of gas is sulfur hexafluoride. This gas would make small changes in the optical considerations since sulfur hexafluoride and air have different indexes of refraction.

While the present invention has been described in conjunction with an automotive vehicle window, it is to be understood that it is equally useful in non-planar architectural glass windows where the windows employ two glass sheets separated by an air gap.

## Claims

1. A non-planar window comprising, first and second glass sheets (22,24), said glass sheets having glass surfaces arranged in facing relationship and glass surfaces forming the outside and inside surfaces of said window, means for forming an air gap (34) between said glass sheets (22,24), and an anti-reflective coating (26,28,30,32) disposed on at least one of said glass sheets.

2. A non-planar window as claimed in claim 1, wherein said anti-reflective coating is on two of said surfaces of said glass sheets.

3. A non-planar window as claimed in claim 2, wherein said anti-reflective coating is on said glass surfaces arranged in facing relationship.

4. A non-planar window as claimed in any one of claims 1 to 3, wherein said anti-reflective coating is a sol-gel coating.

5. A non-planar window as claimed in any one of the preceding claims, wherein said anti-reflective coating is a three layer coating comprising, a first layer contacting a surface of one of said glass sheets, said first layer being formed of a material selected from $TiO_2$-$SiO_2$, $Al_2O_3$, $Ta_2O_5$-$SiO_2$, and $ZrO_2$-$SiO_2$, a second layer contacting said first layer, said second layer being formed of a material selected from $TiO_2$, $SiO_2$-$TiO_2$, $Ta_2O_5$, and $SiO_2$-$Ta_2O_5$ and $ZrO_2$, and a third layer contacting said second layer, said third layer being formed of a material selected from $SiO_2$, $MgF_2$, porous $Al_2O_3$, $Al_2O_3$-$SiO_2$, $TiO_2$-$SiO_2$, $Na_2O$-$MgO$-$Al_2O_3$-$SiO_2$, and fluorinated $MgO$-$SiO_2$.

6. A non-planar window as claimed in claim 5, wherein said first layer has a thickness between 800-860 Angstroms, said second layer has a thickness between 1190-1350 Angstroms, and said third layer has a thickness between 930-1000 Angstroms.

7. A method of making a non-planar window having a sol-get anti-reflective coating on at least one surface thereof the method comprising, dipping a glass sheet in at least one bath containing sol-gel solutions to deposit an anti-reflective coating, curing said sol-gel anti-reflective coating by heating said glass sheet, cooling said glass sheet to foom temperature and assemblying said glass sheet with another glass sheet at their respective peripheries such that an air gap is formed between said glass sheets.

8. A method of applying a sol-gel coating to one side of a piece of glass, the method comprising, sealing two pieces of glass together to form an assembly, dipping the assembly in a bath comprising a sol-gel coating, and separating the assembly.

9. A method according to claim 8, wherein prior to said step of separating, said method includes curing the sol-gel coating by heating the assembly.

10. A method according to claim 8, wherein following said step of separating, said method includes curing said sol-gel coating by heating the assembly.

EP 0 492 785 A1

CAR EXTERIOR

CAR INTERIOR

16

OBJECT

REFLECTED IMAGE

12

REAL IMAGE

10

14

FIG.1

34

CAR
EXTERIOR

28

CAR INTERIOR

26

30

32

20

FIG.2

22

24

CAR
EXTERIOR

48

CAR INTERIOR

50

40

FIG.3

42    46    44

66

68

CAR
EXTERIOR

CAR
INTERIOR

70

72

60

62    64

FIG.4

26    22    28

78              78
76              76
74              74

FIG.5

6

**European Patent Office**

# EUROPEAN SEARCH REPORT

Application Number

EP   91 31 0356

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>Y<br>A | EP-A-0 379 337 (NIPPON SHEET GLASS)<br>* abstract; figures 1,3 *<br>* column 3, line 26 - line 57 *<br>--- | 1-3<br>4,7<br>5,6 | B60J1/00 |
| Y,D<br>A | US-A-4 771 167 (BOULOS)<br>* column 6, line 3 - line 5 *<br>* column 6, line 15 - line 20 *<br>* column 7, line 13 - line 59 *<br>--- | 4,7<br>5,9,10 | |
| A | US-A-3 683 848 (PLUMAT)<br>* column 4, line 21 - line 44; figures 1,2 *<br>--- | 8 | |
| D,A | US-A-3 978 273 (GROTH)<br>* column 5, line 4 - line 8; figure 1 *<br>----- | 1,2 | |
| | | | **TECHNICAL FIELDS SEARCHED (Int. Cl.5)**<br><br>B60J<br>C03C<br>B32B |

The present search report has been drawn up for all claims

| Place of search | Date of completion of the search | Examiner |
|---|---|---|
| THE HAGUE | 24 MARCH 1992 | SOULAIRE D.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)